# EUROPEAN PATENT SPECIFICATION

(11) **EP 0 252 646 B1**
(45) Date of publication and mention of the grant of the patent: **29.09.1993**
(21) Application number: 87305595.8
(22) Date of filing: 23.06.1987
(51) Int. Cl.: G11B 33/06, G11B 33/12

(54) **Paperless portable book**
Tragbares Buch ohne Papier
Livre portable sans papier

(30) Priority: 07.07.1986 JP 160651/86; 01.09.1986 JP 134751/86
(43) Date of publication of application: 13.01.1988
(73) Proprietor: SEMICONDUCTOR ENERGY LABORATORY CO., LTD., Atsugi-shi Kanagawa-ken, 243 (JP)
(72) Inventor: Yamazaki, Shunpei, Tokyo, 157 (JP); Hamatani, Toshiji, Atsugi-Shi Kanagawa-Ken 243 (JP)
(74) Representative: Milhench, Howard Leslie

(56) References cited:
- EP-A- 0 121 251
- EP-A- 0 126 542
- EP-A- 0 198 093
- AT-B- 348 788
- GB-A- 1 456 293
- US-A- 4 150 435
- J. Isailovic, Videodisc and Optical Memory Systems, Prentice-Hall, Inc., Englewood Cliffs, 1985, pp. 20-21, 318-319.
- A. Ralston et al, Eds., ENCYCLOPEDIA OF COMPUTER SCIENCE AND ENGINEERING, VAN NOSTRAND REINHOLD CO., 1983, page 198.

## Description

### BACKGROUND OF THE INVENTION

The present invention relates to a paperless book, and more particularly relates to a paperless book which is in readily transportable form and is compact and convenient for assembly in book collections such as in the home, in schools and colleges, and in libraries.

A vast quantity of printed matter is widely distributed in the form of books. Such printed books generally comprise at least several tens of paper sheets and often several hundreds of paper sheets, and therefore the weight of a book can be quite substantial. Especially in the case of novels and books for professional use, the weight of a copy may exceed 1 Kg. Because of this, books are generally transported by trucks to book shops and other retailers, which increases their cost due to the high transportation cost. Furthermore, books are often somewhat large in size so that a large amount of space has to be provided for storing copies.

### SUMMARY OF THE INVENTION

According to the present invention there is provided a portable information display device for use as a paperless portable book, said device comprising, in an integrated unit, a reader (7) for a magnetic floppy disc, optical disc or other interchangeable compact data storage medium, a processor (11), an input facility (3) operable to cause said processor to selectively process for display information retrieved from or written to the data storage medium, a display panel (2) for displaying such information, and a solar panel (6) for powering the unit, the unit being generally in the shape of a book comprising a body portion (1) and a cover portion (5) hingedly connected thereto, the display panel being provided in said body portion and occupying a major part of the surface area of the body portion that is covered by the cover portion, and the solar panel being provided in said cover portion.

As will be explained in greater detail hereinafter, the invention proposes that an electronic display and an electronic memory are used in place of printed paper to provide a handy device for reading written material. More particularly, the information consisting of characters such as letters, symbols and the like is converted into digital form. Namely, the information in the form of printed words of a book is converted into a suitably encoded digital form on a memory such as a magnetic floppy disc, an optical disc or other convenient storage device. The paperless book according to the invention is comprised of a reproducing device for use with such a memory and a suitable display. The reader views the display in place of reading the printed paper of a conventional book.

By virtue of the invention, a collection of conventional books can be replaced by one reproducing device as abovementioned and a collection of floppy discs or other compact memories each weighing, for example, only 10g to 30g. Furthermore, only the light weight memories have to be transported to book retailers.

The advantages of the invention become particularly significant if the reproducing devices are standard issue to all members of a particular group. For example, if one reproducing device is provided for each student in a school, the students do not have to bring their heavy books to the school and instead need to carry with them only light weight memories.

Further features of the invention are set forth in the appended claims and will become clear from consideration of the following description of an exemplary embodiment which is shown in the accompanying drawings.

### BRIEF DESCRIPTION OF THE DRAWINGS

Fig.1 is a perspective view showing an exemplary paperless book in accordance with the invention;
Fig.2 is a side elevation view showing the paperless book of Fig.1; and
Fig.3 is a block diagram of the paperless book of Figs. 1 and 2.

### DESCRIPTION OF THE PREFERRED EMBODIMENT

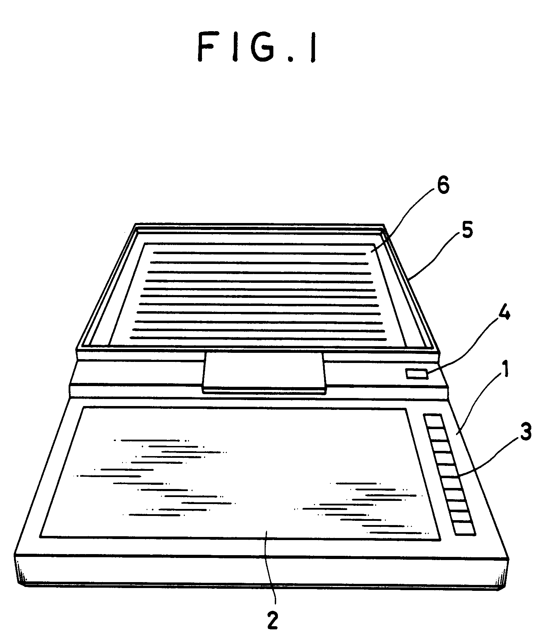

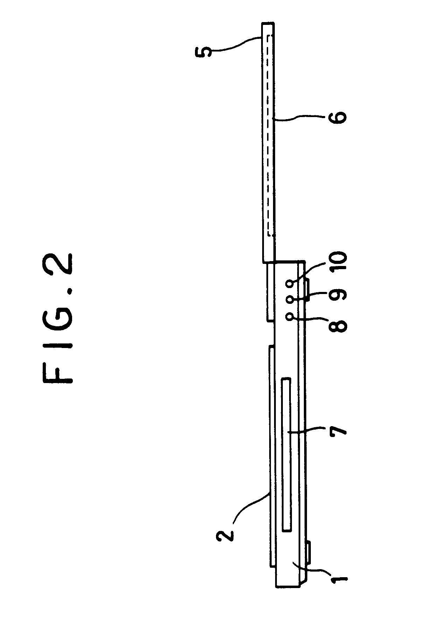

Referring now to Figs. 1, 2 and 3, a portable paperless book in accordance with the present invention is illustrated. The book comprises a reproducing device 1 having a display 2 occupying a major part of the upper surface of its body portion, key buttons or other external input facilities 3, an on/off switch 4 operated by opening and closing a hinged lid 5 of the device, a solar panel 6 for energy supply provided on the lid 6, and occupying a major part of the surface area of the lid a data file processor 7, an input terminal 8 for connection of an external electricity supply to the device, and terminals 9 and 10 for inputting data from an external device.

In the illustrated embodiment, the display 2 is a liquid crystal display and the data file processor is a disc drive adapted for use with optical discs on which information is stored in terms of variations in the reflectance of the disc to incident light. A magnetic floppy disc and associated magnetic read heads can be employed in place of the optical disc and its associated reader. Liquid crystal displays are preferred in that they do not over stimulate the eyes, but other display formats can be used. The solar panel 6 may for example be an amorphous silicon semiconductor solar panel of 200 mm length and 300 mm width.

The amorphous silicon solar panel consists of a plurality (e.g. 25) of photoelectric conversion devices connected to each other in series, each conversion device comprising a transparent substrate (such as a glass or plastics plate, or the like), a transparent conductive film of such as indium tin oxide, SnO₂, ZnO or multiple layers thereof formed on the substrate and constituting a first electrode of the panel, a multi-layered amorphous silicon semiconductor incorporating a PIN junction therein formed for example by a known CVD process, and a second transparent electrode film formed over the semiconductor. The conversion devices may be manufactured by using laser processing techniques scribing the layers deposited on he 200mm x 300mm substrate. By virtue of the transparency of the substrate and the underlying and overlying electrodes, the solar panel can receive sunlight from both sides of the lid so that power generation can continue regardless of whether the lid is open or closed.

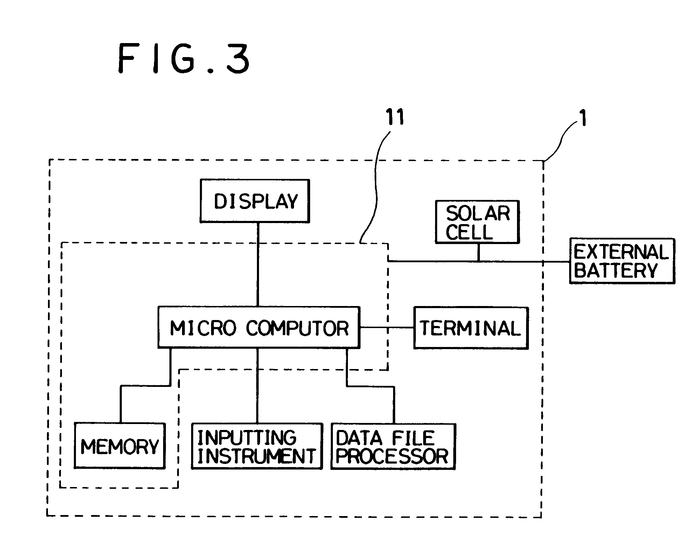

The paperless book according to the invention is further provided with a processing unit 11 shown schematically in Fig.3 and comprising a microcomputer and a memory. By means of this unit, information reproduced by the data file processor 7 may be transmitted to the display 2 in accordance with commands entered by use of the input facilities 3, so that a user can as he desires read from the display screen 2 just as he would read a conventional book. On the display 2, 50 lines of text each accommodating up to 60 characters can for example be displayed and the text displayed on the screen can be changed easily by operating the input facility 3.

In a modification of the above described embodiment a plurality of data pages may be reproduced at a time by the data file processor 7 and temporarily stored in the user memory provided in the unit 11. By this means a reader can repeatedly call arbitrarily selected pages of text for display on the screen without delay just as he can during reading of a printed reference.

Furthermore, a matrix array of touch sensors or photo sensors can be formed on the display so that, by use of touch or of a light pen, a user can designate particular portions of the display information and store corresponding flags in the user memory in the unit 11, for example in order to cause important portions of the display text to be emphasized by underlining or inverted commas.

While the present invention has been described in conjunction with a particular embodiment, it is to be appreciated that the invention is not limited to the described embodiment and that many modifications and variations are possible without departure from the scope of the invention as set forth in the appended claims. For example, the reproducing device of the described paperless book could if desired be provided with a battery for storage of electricity generated by the solar panel. Furthermore, the compact digital storage medium could alternatively be a digital magnetic tape for example or an EPROM or the like. It is further to be appreciated that whilst the paperless book of the invention has been described herein as a replacement for novels and other conventional books having pages of printed text, the book could be adapted to be used as an electronic diary with the facilities 3 enabling the user to make his own entries onto blank "pages" of the diary.

## Claims

1. A portable information display device for use as a paperless portable book, said device comprising, in an integrated unit, a reader (7) for a magnetic floppy disc, optical disc or other interchangeable compact data storage medium, a processor (11), an input facility (3) operable to cause said processor to selectively process for display information retrieved from or written to the data storage medium, a display panel (2) for displaying such information, and a solar panel (6) for powering the unit, the unit being generally in the shape of a book comprising a body portion (1) and a cover portion (5) hingedly connected thereto, the display panel being provided in said body portion and occupying a major part of the surface area of the body portion that is covered by the cover portion, and the solar panel being provided in said cover portion.

2. A display device according to claim 1 wherein the solar panel (6) occupies a major part of the surface area of the cover portion (5).

3. A display device according to claim 1 or 2 wherein said solar panel (6) is made of amorphous silicon semiconductor material.

4. A display device according to any preceding claim wherein said solar panel (6) is adapted to generate electricity from light received on both sides thereof.

5. A display device according to claim 4 wherein said solar panel (6) comprises a transparent substrate, a photoelectric conversion layer supported by the substrate, and transparent electrodes associated with said photoelectric conversion layer, the solar panel (6) thereby being responsive to light received on both sides thereof.

6. A display device according to any preceding claim wherein said data storage medium stores the text of a book and said input facility (3) is adapted to enable a user of the device to selectively access said text.

7. A display device according to claim 6 wherein the processor (11) includes a user memory and the device is arranged to enable a plurality of text pages to be stored in said user memory and to be selected arbitrarily for display.

8. A display device according to claim 6 or 7 wherein the display includes a matrix array of sensors arranged to enable a user to flag designated portions of a displayed text.

9. A display device according to any preceding claim wherein the display panel (2) comprises a liquid crystal display panel.

10. A display device according to any preceding claim in operative combination with at least one said compact data storage medium.

## Patentansprüche

1. Tragbare Informationsanzeigevorrichtung zur Verwendung als tragbares Buch ohne Papier, welche Vorrichtung folgendes als integrierte Einheit aufweist: eine Leseeinrichtung (7) für eine magnetische Diskette, eine optische Platte oder ein anderes austauschbares, kompaktes Datenspeichermedium, einen Prozessor (11), eine Eingabeeinrichtung (3), die so betrieben werden kann, daß der Prozessor dazu veranlaßt wird, selektiv Anzeigeinformation zu verarbeiten, die aus dem Datenspeichermedium abgerufen oder in dieses eingeschrieben wird, ein Anzeigepaneel (2) zum Darstellen solcher Information und eine Solarzellenplatte (6) zum Betreiben der Einheit, welche Einheit im wesentlichen die Form eines Buchs mit einem Gehäuseteil (1) und einem damit klappbar verbundenen Deckelteil (5) aufweist, wobei das Anzeigepaneel im Gehäuseteil vorhanden ist und einen Hauptteil der Oberfläche des vom Deckelteil abgedeckten Gehäuseteils einnimmt und wobei die Solarzellenplatte im Deckelteil vorhanden ist.

2. Anzeigevorrichtung nach Anspruch 1, bei der die Solarzellenplatte (6) den Hauptteil der Oberfläche des Deckelteils (5) einnimmt.

3. Anzeigevorrichtung nach Anspruch 1 oder Anspruch 2, bei der die Solarzellenplatte (6) aus einem amorphen Siliziumhalbleitermaterial besteht.

4. Anzeigevorrichtung nach einem der vorstehenden Ansprüche, bei der die Solarzellenplatte (6) so ausgebildet ist, daß sie Elektrizität aus auf beiden Seiten empfangenem Licht erzeugt.

5. Anzeigevorrichtung nach Anspruch 4, bei der die Solarzellenplatte (6) ein lichtdurchlässiges Substrat, eine vom Substrat getragene photoelektrische Wandlerschicht und lichtdurchlässige Elektroden aufweist, die der photoelektrischen Wandlerschicht zugeordnet sind, wodurch die Solarzellenplatte (6) für auf beiden Seiten empfangenes Licht empfindlich ist.

6. Anzeigevorrichtung nach einem der vorstehenden Ansprüche, bei der das Datenspeichermedium den Text eines Buchs speichert und die Eingabeeinrichtung (3) so ausgebildet ist, daß sie den Benutzer der Vorrichtung dazu in die Lage versetzt, selektiv auf den Text zuzugreifen.

7. Anzeigevorrichtung nach Anspruch 6, bei der der Prozessor (11) einen Benutzerspeicher aufweist und die Vorrichtung so ausgebildet ist, daß sie es ermöglicht, daß mehrere Textseiten in diesem Benutzerspeicher abgespeichert werden können und zur Anzeige beliebig ausgewählt werden können.

8. Anzeigevorrichtung nach Anspruch 6 oder Anspruch 7, bei der die Anzeige ein Matrixarray aus Sensoren aufweist, die so angeordnet sind, daß sie einen Benutzer dazu in die Lage versetzen, spezifizierte Abschnitte eines dargestellten Textes mit Flags zu versehen.

9. Anzeigevorrichtung nach einem der vorstehenden Ansprüche, bei der das Anzeigepaneel (2) ein Flüssigkristallanzeigepaneel aufweist.

10. Anzeigevorrichtung nach einem der vorstehenden Ansprüche in zusammenwirkender Kombination mit mindestens einem kompakten Datenspeichermedium.

## Revendications

1. Dispositif portatif d'affichage d'informations destiné à être utilisé comme un livre portatif, sans papier, ledit dispositif comprenant, dans une unité intégrée, un lecteur (7) pour une disquette magnétique, un disque optique ou un autre support de stockage de données, interchangeable, de taille réduite, un processeur (11), un dispositif d'entrée (3) actionnable pour obliger ledit processeur à traiter sélectivement l'affichage d'informations extraites du support de stockage de données ou écrite sur celui-ci, un panneau d'affichage (2) pour l'affichage de telles informations, et un panneau solaire (6) pour l'alimentation de l'unité, l'unité étant globalement de la forme d'un livre comprenant une partie corps (1) et une partie couvercle (5) raccordée de façon articulée sur celle-ci, le panneau d'affichage étant situé sur ladite partie corps et occupant une majeure partie de la surface de la face de la partie corps qui est recouverte par la partie couvercle, et le panneau solaire étant situé sur ladite partie couvercle.

2. Dispositif d'affichage selon la revendication 1, dans lequel le panneau solaire (6) occupe une majeure partie de la surface de la face de la partie couvercle (5)

3. Dispositif d'affichage selon la revendication 1 ou 2, dans lequel ledit panneau solaire (6) est fait d'un matériau semi-conducteur à base de silicium amorphe.

4. Dispositif d'affichage selon l'une quelconque des revendications précédentes, dans lequel ledit panneau solaire (6) est conçu pour produire de l'électricité à partir de la lumière reçue sur ses deux côtés.

5. Dispositif d'affichage selon la revendication 4, dans lequel ledit panneau solaire (6) est constitué d'un substrat transparent, d'une couche de conversion photo-électrique supportée par le substrat, et d'électrodes transparentes associées avec ladite couche de conversion photo-électrique, le panneau solaire (6) réagissant ainsi à la lumière reçue sur ses deux côtés.

6. Dispositif d'affichage selon l'une quelconque des revendications précédentes, dans lequel ledit support de stockage de données mémorise le texte d'un livre et ledit dispositif d'entrée (3) est conçu pour permettre à l'utilisateur du dispositif d'accéder de façon sélective audit texte.

7. Dispositif d'affichage selon la revendication 6, dans lequel le processeur (11) comprend une mémoire d'utilisateur et le dispositif est agencé pour permettre à plusieurs pages de texte d'être mémorisées dans ladite mémoire d'utilisateur et d'être sélectionnées arbitrairement pour être affichées.

8. Dispositif d'affichage selon la revendication 6 ou 7, dans lequel l'affichage comprend une surface matricielle de détecteurs agencés pour permettre à l'utilisateur d'appeler des parties désignées d'un texte affiché.

9. Dispositif d'affichage selon l'une quelconque des revendications précédentes, dans lequel le panneau d'affichage (2) est constitué d'un panneau d'affichage à cristaux liquides.

10. Dispositif d'affichage selon l'une quelconque des revendications précédentes, relié de façon fonctionnelle à au moins un desdits supports de stockage de données, de taille réduite.
